# EUROPÄISCHE PATENTSCHRIFT

(11) **EP 3 300 976 B1**
(45) Veröffentlichungstag und Bekanntmachung des Hinweises auf die Patenterteilung: **16.06.2021**
(21) Anmeldenummer: 17185553.9
(22) Anmeldetag: 09.08.2017
(51) Int. Cl.: B60T 13/66, B60T 13/68

(54) **STEUEREINRICHTUNG UND STEUERSYSTEM EINER HYDRAULISCH BETÄTIGTEN FESTSTELL- UND/ODER NOTBREMSEINRICHTUNG EINES LAND- ODER BAUWIRTSCHAFTLICH NUTZBAREN FAHRZEUGS**
CONTROL DEVICE AND CONTROL SYSTEM OF A HYDRAULICALLY ACTUATED DEVICE FOR PARKING AND/OR EMERGENCY BRAKE UNIT OF A VEHICLE USABLE IN AGRICULTURE OR CIVIL ENGINEERING
DISPOSITIF DE COMMANDE ET SYSTÈME DE COMMANDE D'UN DISPOSITIF D'ARRÊT ET/OU D'ARRÊT D'URGENCE À ACTION HYDRAULIQUE D'UN VÉHICULE UTILISÉ DANS L'AGRICULTURE OU DANS LA CONSTRUCTION CIVILE

(30) Priorität: 29.09.2016 DE 102016118312
(43) Veröffentlichungstag der Anmeldung: 04.04.2018
(73) Patentinhaber: CLAAS Tractor S.A.S., 78141 Vélizy-Villacoublay Cedex (FR)
(72) Erfinder: Fedde, Thomas, 33129 Delbrück (DE)
(74) Vertreter: CLAAS Gruppe

(56) Entgegenhaltungen:
- EP-A1- 1 504 975
- EP-A1- 1 614 600
- EP-A1- 2 974 926
- EP-A1- 2 982 555
- EP-A1- 3 034 369
- EP-A2- 1 199 232
- WO-A2-2009/156833
- DE-A1-102005 042 194
- DE-A1-102005 042 195
- DE-A1-102011 053 568
- US-A- 4 856 622
- US-A- 5 281 007

## Beschreibung

Die Erfindung betrifft eine Steuereinrichtung für eine hydraulisch betätigte, mit einem Federspeicherbremszylinder als Bremszuspanneinrichtung versehene Feststell- und/oder Notbremseinrichtung, vorzugsweise eines land- oder bauwirtschaftlich nutzbaren Traktors oder Systemfahrzeuges, wobei die Steuereinrichtung zur Steuerung des Druckes in einem Druckraum des Federspeicherbremszylinders vorgesehen und zwischen diesem und einer Druckquelle angeordnet ist, und wobei die Steuereinrichtung ein als Wegeventil ausgebildetes, in zwei unterschiedliche Schaltstellungen aktuierbares Bremsbetätigungsventil aufweist, das über eine elektronische Steuereinrichtung betätigt wird.

Weiterhin betrifft die Erfindung auch ein Steuersystem einer hydraulisch betätigten Feststell- und/oder Notbremseinrichtung eines land- oder bauwirtschaftlich nutzbaren Fahrzeugs, wobei die Feststell- und/oder Notbremseinrichtung einen Federspeicherbremszylinder mit einem mit Druckmittel beaufschlagbaren Druckraum aufweist, der über ein in zwei Schaltstellungen aktuierbares, über eine elektronische Steuereinheit steuerbares Bremsbetätigungsventil und eine als 3/3-Wegeventil ausgebildete, manuell betätigbare Ventileinheit mit einer als Druckspeicher ausgeführten Druckquelle verbindbar ist, wobei die Ventileinheit eine Durchflussstellung, eine Sperrstellung und eine Ablaufstellung aufweist.

Feststellbremsen, die über eine automatische Betätigung verfügen und dabei elektronisch angesteuert werden, kommen zunehmend zur Komfortverbesserung an land- oder bauwirtschaftlich nutzbaren Traktoren zum Einsatz. Dabei ist von großer Bedeutung, dass die Bremsbetätigung nicht nur der Aufmerksamkeit des Fahrers überlassen wird, sondern abhängig von Situationen und Betriebszuständen des Traktors generell aktiviert wird. Von einem sich selbstständig in Bewegung setzenden Traktor gehen erhebliche Unfallgefahren aus, insbesondere dann, wenn der Fahrer im Heck- oder Frontbereich des Traktors an diesen Anbaugeräte an- oder abkuppelt sowie an diesen Anbaugeräten oder an den Kuppeleinrichtungen des Traktors Einstellungen vornimmt. Eine elektronisch ansteuerbare Feststellbremse ist außerdem von großer Bedeutung, wenn moderne Traktoren im Rahmen einer Leistungsverzweigung des Getriebes mit einem als CVT-Getriebe (Continuously Variable Transmission) versehen sind, so dass sich der Traktor im aktiven Stillstand bei nicht angetriebener Getriebeeingangswelle, also abgestellter Hubkolbenbrennkraftmaschine, in Bewegung setzen kann. Das kann beispielsweise auch dann der Fall sein, wenn die Hubkolbenbrennkraftmaschine aufgrund eines Kraftstoffmangels zum Stillstand kommt.

Es ist grundsätzlich wichtig, dass beim Verlassen der Kabine des Traktors durch den Fahrer stets die Feststellbremse betätigt wird, was allerdings häufig nicht der Fall ist. Im Rahmen der Automatisierung von Traktoren ist eine elektronisch ansteuerbare Feststellbremse zwingend notwendig, wobei sichergestellt sein muss, dass der Traktor im Gelände und auf der Straße ohne zusätzliche Betätigung einer entsprechenden Steuervorrichtung sicher abgestellt wird. Ferner ist von Bedeutung, dass die Bremsbetätigung nicht nur auf die Feststellbremse des Traktors sondern auch auf die eines mit diesem verbundenen Anhängers wirkt. Außerdem sollte die Feststellbremse generell beim Abstellen der Hubkolbenbrennkraftmaschine aktiviert sein. Eine elektronisch ansteuerbare Verstellbremse muss hohe Anforderungen an die funktionale Sicherheit erfüllen, damit das Fahrzeug zum einen, wie dargelegt, sicher abgestellt werden kann, aber zum anderen auch die Feststellbremse nicht unbeabsichtigt während der Fahrt aktiviert wird, was zu unkontrollierbaren Fahrzuständen führen kann.

Außerdem genügen die bekannten Konzepte für elektrohydraulische betätigbare Feststellbremsen, wie nachfolgend dargelegt, nicht mehr den heute erforderlichen Standards für die Entwicklung elektronischer Systeme in landwirtschaftlichen Fahrzeugen. Ein einfacher Fehler in der elektrohydraulischen Betätigung, bei dem zum Beispiel ein Bruch im Kabel eines Fahrzeug Kabelbaums auftritt, ist aufgrund des hohen Anteils an Straßenfahrten des Traktors, die dieser mit seiner hohen Gesamtmasse, zumeist mit Anhängern sowie einer hohen Geschwindigkeit durchführt, nicht mehr akzeptabel. Die Feststellbremse muss außerdem eine sogenannte hill-holder-Funktion erfüllen, bei der beim Anfahrvorgang selbsttätig die Feststellbremse gelöst wird, ohne dass der Traktor samt Anhänger oder Anbaugerät zurückrollt. Grundsätzlich ist es von Bedeutung, dass die zumeist mit einem Federspeicherbremszylinder versehene Bremszuspanneinrichtung auch als Notbremseinrichtung verwendet werden kann, wenn die normale Betriebsbremse ausfällt oder deren Bremsmoment nicht ausreichend ist.

Eine Steuereinrichtung für eine hydraulisch betätigte, mit einem Federspeicherbremszylinder als Bremszuspanneinrichtung versehene Feststell- und/oder Notbremseinrichtung, vorzugsweise eines land- oder bauwirtschaftlich nutzbaren Traktors oder Systemfahrzeuges der im Oberbegriff der Patentansprüche 1 und 13 angegebenen Gattung ist aus der DE 10 2008 030 511 B4 bekannt. Diese Bremsanlage weist eine Lamellenbremse auf, die über ein in einem Federspeicherbremszylinder angeordnetes Federelement eingerückt wird, um ein Bremsmoment zu erzeugen. Dieses Bremsmoment kann dadurch aufgehoben werden, dass in einem Druckraum des Federspeicherbremszylinders ein entgegen der Kraft des Federelements wirkender Druck aufgebaut wird. Dieser Druckaufbau in dem Druckraum wird ausgehend von einer als Druckspeicher ausgebildeten Druckquelle über eine erste als 3/2-Wegeventil ausgebildete Ventileinheit gesteuert.

Diese als Bremsbetätigungventil dienende erste Ventileinheit wird in beiden Stellrichtungen über eine elektronische Steuereinheit elektromagnetisch betätigt, wobei die Steuereinheit unter anderem mit einem durch den Fahrer manuell verstellbaren Schaltelement verbunden ist. Die erste Ventileinheit ist außerdem mit einer Rastvorrichtung versehen, über die der entsprechende Steuerschieber bei einer plötzlichen Leistungsunterbrechung in der zuletzt geschalteten Schaltstellung gehalten werden soll. Zwischen dieser ersten Ventileinheit und dem Druckspeicher ist eine zweite Ventileinheit angeordnet, die als 3/3-Wegeventil ausgebildet ist. Diese zweite Ventileinheit weist einen über einen Hebel oder ein Pedal gegen die Kraft einer Druckfeder in drei Schaltstellungen betätigbaren Steuerschieber auf. Mittels der zweiten Ventileinheit soll manuell eine dosierte Betätigung der Feststellbremse erfolgen, vorausgesetzt, die erste Ventileinheit befindet sich in ihrer Durchflussstellung.

Weitere derartige Steuereinrichtungen sind aus den Entgegenhaltungen WO2009/156833 A2, EP1504975 A1 und EP2974926 A1 bekannt.

Es ist Aufgabe der vorliegenden Erfindung, ein Bremsbetätigungsventil derart zu gestalten, dass dessen Steuerschieber ohne Rastmittel, die zusätzlich zu dessen Stelleinrichtung vorzusehen sind, in der zuletzt eingenommenen Schaltstellung gehalten wird.

Diese Aufgabe wird, ausgehend von dem jeweiligen Oberbegriff der Patentansprüche 1 und 12 durch deren kennzeichnende Merkmale gelöst. Vorteilhafte Ausgestaltungen sind in den vom Patentanspruch 1 abhängigen Patentansprüchen wiedergegeben, welche jeweils für sich genommen oder in Kombination miteinander einen Aspekt der Erfindung darstellen können.

Danach ist eine Steuereinrichtung für eine hydraulisch betätigte, mit einem Federspeicherbremszylinder als Bremszuspanneinrichtung versehene Feststell- und/oder Notbremseinrichtung, vorzugsweise eines land- oder bauwirtschaftlich nutzbaren Traktors oder Systemfahrzeuges vorgesehen. Die Steuereinrichtung dient zur Steuerung des Druckes in einem Druckraum des Federspeicherbremszylinders, wobei sie zwischen diesem und einer Druckquelle angeordnet ist und ein als Wegeventil ausgebildetes, elektronisch in zwei unterschiedliche Schaltstellungen aktuierbares Bremsbetätigungsventil aufweist. Dabei wird das Bremsbetätigungsventil über eine elektronische Steuereinheit betätigt. Erfindungsgemäß ist eine Stelleinrichtung des Bremsbetätigungsventils derart ausgebildet, dass diese das Bremsbetätigungsventil in zumindest einer seiner Schaltstellungen eigenstabil hält, so dass dessen Steuerschieber ohne eine weitere Bestromung der Stelleinrichtung in einer zuletzt eingestellten Schaltstellung verbleibt.

Damit wird verhindert, dass äußere Kräfte eine Änderung der vorgegebenen Schaltstellung des Steuerschiebers hervorrufen. Derartige äußere Kräfte können beispielsweise durch Erschütterungen oder Bauteilbewegungen am Traktor, die beim Überfahren von Fahrbahnunebenheiten auftreten, auf die Stelleinrichtung und auch auf eine Rastiereinrichtung übertragen werden. Durch die innerhalb der Stelleinrichtung vorgesehene Hemmung wird mit einer hohen Funktionssicherheit verhindert, dass die äußeren Kräfte Schaltbewegungen des Steuerschiebers auslösen. Die Eigenstabilität kann in einer oder in beiden Schaltstellungen, also auch bistabil wirken.

Demgegenüber ist die erste Ventileinheit nach der DE 10 2008 030 511 B4 mit einer in Verlängerung des Steuerschiebers vorgesehenen Rastvorrichtung versehen. Eine derartige formschlüssig wirkende Rastvorrichtung weist keine ausreichende Ausfallsicherheit auf, d.h., es besteht das Risiko, dass trotz der Rastvorrichtung Fehlschaltungen des Bremsbetätigungsventils ausgelöst werden und daraus Unfallrisiken resultieren.

In weiterer Ausgestaltung der Erfindung ist vorgesehen, dass die Stelleinrichtung einen selbsthemmenden Antrieb aufweist. Dabei weist die Stelleinrichtung vorzugsweise einen von der Steuereinrichtung angesteuerten Elektromotor auf, der ein hochübersetztes Getriebe rotatorisch antreibt. Das hochübersetzte Getriebe kann durch entsprechende Räderpaare bzw. als Planetengetriebe oder Wellgetriebe (beispielsweise Harmonic-Drive-Getriebe) ausgebildet sein. Die geringe Ausgangsdrehzahl des Getriebes wird in eine lineare Stellbewegung gewandelt, die auf den Steuerschieber wirkt. Dabei können die Eigenstabilität bzw. Hemmung innerhalb des Getriebes oder bei der Wandlung der rotativen Bewegung in die lineare Stellbewegung erzielt werden.

Dabei kann weiterhin vorgesehen sein, dass der elektromotorische Antrieb einen als Synchronmotor ausgebildeten Schrittmotor aufweist. Bei einem Schrittmotor, der als Synchronmotor ausgebildet ist, wird der Rotor um einen vorgegebenen Schrittwinkel gedreht. Dies geschieht durch ein gesteuertes elektromagnetisches Feld, das schrittweise rotiert. Die Verwendung eines Schrittmotors weist im vorliegenden Fall die Vorteile auf, dass Schrittmotoren prinzipbedingt von Schritt zu Schritt einen internen Widerstand aufweisen, der überwunden werden muss, damit die Rotorwelle um einen Winkelschritt gedreht zu werden. Damit wird das Haltemoment verbessert. Außerdem kann der Schrittmotor eine Positionsregelung aufweisen, mit der ein Erreichen einer Sollposition durch Ermittlung der Schritte bestimmbar ist, so dass die Schaltstellungen des Steuerschiebers exakt gesteuert werden können.

Außerdem ist vorgesehen, dass zur Schaffung eines selbsthemmenden Antriebs das Reibmoment an einem Elektromotor der Stelleinrichtung erhöht wird, indem an einer Rotorwelle des Elektromotors eine Reibeinrichtung vorgesehen ist. Diese als Bremse wirkende Reibeinrichtung kann kontinuierlich wirken oder bei einer Bestromung des Elektromotors ausgerückt werden.

Weiterhin kann der Stellantrieb als Zahnstangenantrieb, dem ein hochübersetztes Getriebe vorgeschaltet ist, ausgebildet sein. Das hochübersetzte Getriebe liefert an seiner Ausgangswelle eine niedrige Drehzahl und ein hohes Drehmoment, die über ein Zahnrad auf eine Zahnstange übertragen werden. Sowohl der Zahnstangentrieb als auch das hochübersetzte Getriebe sorgen für die geforderte Eigenstabilität der Stelleinrichtung. Eventuell ist es für die Selbsthemmung auch ausreichen, nur einen Zahnstangentrieb vorzusehen.

Alternativ dazu kann der Stellantrieb einen Spindeltrieb aufweisen. Eine Spindelmutter ist in diesem Fall mit der Ausgangswelle des hochübersetzten Getriebes oder mit dem Rotor des Elektromotors verbunden, während die Spindel am Steuerschieber angreift. Bei einem direkten Antrieb des Spindeltriebs über den Elektromotor weisen die Spindelmutter und die Spindel eine geringe Gewindesteigung auf.

Es besteht aber auch die Möglichkeit, den Spindeltrieb als Rollengewindetrieb auszubilden. Bei einem Rollengewindetrieb sind zwischen einem Außengewinde einer Spindel und einem Innengewinde einer Mutter planetenartig Gewinderollen angeordnet, die in einem Planetenträger geführt sind. Der Planetentrieb sorgt für eine hohe Übersetzung und für die gemäß der Erfindung vorgesehene Eigenstabilität. Im vorliegenden Fall könnte die Mutter über eine Hohlwelle mit dem Elektromotor verbunden sein, während die Spindel am Steuerschieber angreift. Die Kraftübertragung erfolgt über die Gewindeflanken der Gewinderollen. Ein Rollengewindetrieb weist eine hohe axiale Steifigkeit auf.

Schließlich soll bei einem Steuersystem einer hydraulisch betätigten Feststell- und/oder Notbremseinrichtung eines land- oder bauwirtschaftlich nutzbaren Fahrzeugs die Feststell- und/oder Notbremseinrichtung einen Federspeicherbremszylinder mit einem mit Druckmittel beaufschlagbaren Druckraum aufweisen. Der Druckraum ist über ein in zwei Schaltstellungen aktuierbares, über eine elektronische Steuereinheit steuerbares Bremsbetätigungsventil und eine als 3/3-Wegeventil ausgebildete, manuell betätigbare Ventileinheit mit einer als Druckspeicher ausgeführten Druckquelle verbindbar. Dabei weist die Ventileinheit eine Durchflussstellung, eine Sperrstellung und eine Ablaufstellung auf. Erfindungsgemäß soll die im Steuersystem verwendete Steuereinrichtung nach einem der vorstehend erläuterten Patentansprüche ausgebildet.

Die Erfindung ist nicht auf die angegebene Kombination der Merkmale der unabhängigen Patentansprüche 1 und 13 mit den von diesen abhängigen Patentansprüchen beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der Ausführungsbeispiele dieser vereinfacht dargestellt sind. Es zeigen:
- Figur 1: eine schematische Ansicht eines Steuersystems einer hydraulisch betätigten Feststell- und/oder Notbremseinrichtung eines land- oder bauwirtschaftlich nutzbaren Fahrzeugs, die über einen Federspeicherbremszylinder betätigbar ist, wobei ein zur Steuerung des Federspeicherbremszylinders vorgesehenes Bremsbetätigungsventil mittels einer erfindungsgemäß ausgebildeten Stelleinrichtung aktuiert wird,
- Figur 2: eine erste Ausführungsform der nach Figur 1 vorgesehenen Stelleinrichtung, bei der diese einen Zahnstangenantrieb aufweist,
- Figur 3: eine zweite Ausführungsform der nach Figur 1 vorgesehenen Stelleinrichtung, bei der diese ein Reibradgetriebe aufweist und
- Figur 4: eine dritte Ausführungsform der nach Figur 1 vorgesehenen Stelleinrichtung, bei der diese einen Rollengewindetrieb aufweist.

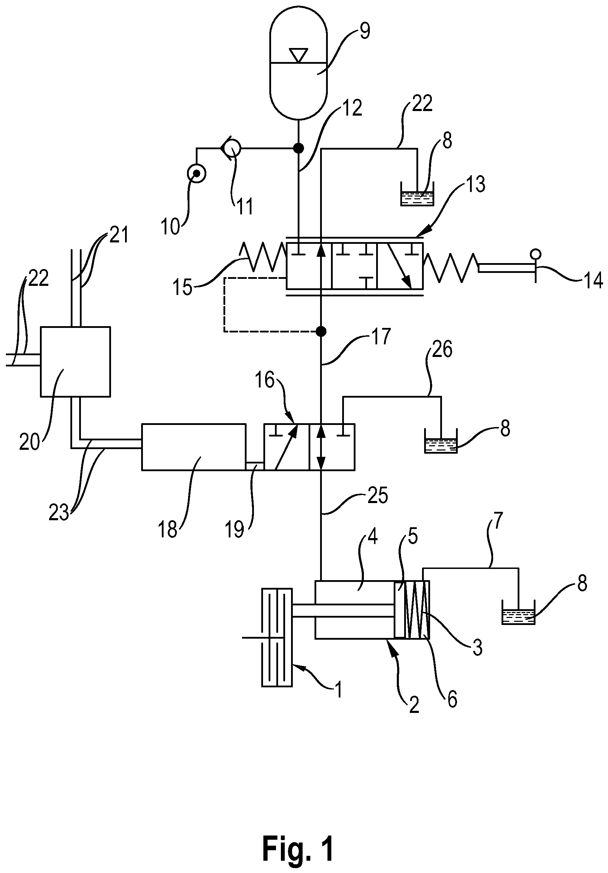

In der Figur 1 ist mit 1 eine Feststell- und/oder Notbremseinrichtung eines Traktors bezeichnet, die im vorliegenden Fall als Lamellenbremse ausgebildet ist. Diese wird über einen als Bremszuspanneinrichtung dienenden Federspeicherbremszylinder 2 ein- oder ausgerückt, wobei ein Einrücken über die Kraft einer Druckfeder 3 und ein Ausrücken über einen in einem Druckraum 4 wirkenden Druck, der einen Bremskolben 5 hydraulisch beaufschlagt, bewirkt werden. Ein Federraum 6 des Federspeicherbremszylinders 2 ist über eine Entlüftung 7 mit einem Tank 8 verbunden.

Das entsprechende dem Druckraum 4 zuzuführende hydraulische Druckmittel wird dabei für eine Bremsbetätigung über einen Druckspeicher 9, der aus einem Hydrauliksystem 10 des Traktors, beispielsweise der Arbeitshydraulik, über ein Rückschlagventil 11 befüllt wird, zur Verfügung gestellt. Von dem Druckspeicher führt eine Druckleitung 12 zu einem in den vorstehenden Erläuterungen auch als manuell betätigbare Ventileinheit bezeichnetes 3/3-Wegeventil 13, das mittels eines Handhebels oder Fußpedals 14 entgegen der Kraft einer Rückstellfeder 15 in drei Schaltstellungen betätigbar ist.

Dem 3/3-Wegeventil 13 ist ein als Bremsbetätigungsventil dienendes 3/2-Wegeventil 16 nachgeschaltet, wobei das 3/3-Wegeventil 13 und dass 3/2-Wegeventil 16 über eine Arbeitsleitung 17 miteinander verbunden sind. Dabei ist das als Bremsbetätigungsventil dienende 3/2-Wegeventil 16 über eine Stelleinrichtung 18 betätigbar, die gemäß der vorliegenden Erfindung bewirken soll, dass ein im Einzelnen nicht dargestellter Steuerschieber des 3/2-Wegeventil 16 in seinen Schaltstellungen eigenstabil sein soll. Die Stelleinrichtung 18 verstellt das 3/2-Wegeventil 16 über ein Gestänge 19 wahlweise in eine seiner beiden Schaltstellungen.

Die Stelleinrichtung 18 ist mit einer elektronischen Steuereinrichtung 20 verbunden, die ihrerseits in einen CAN-Bus 21 integriert ist, wobei an die Steuereinrichtung 18 unterschiedliche Daten des Traktors, wie z.B. über den Betriebszustand der Hubkolbenbrennkraftmaschine, Betriebszustand des Traktorgetriebes, Zustand der Feststellbremse, Besetzung der Kabine durch den Fahrer, Fehler im Bordnetz usw. übermittelt werden. Die Steuereinrichtung 20 weist eine Stromversorgung 22 auf. Von der Steuereinrichtung 20 führen Steuerleitungen 23 zur Stelleinrichtung 18, über die diese betätigt wird.

Wie aus der Figur 1 hervorgeht, weist das 3/3-Wegeventil 13 eine erste Schaltstellung auf, in der es sich aktuell befindet und in der die Arbeitsleitung 17 über eine Rücklaufleitung 24 mit dem Tank 8 verbunden, also drucklos ist, während die Druckleitung 12 gesperrt ist. Da sich das 3/2-Wegeventil 16 in seiner Durchflussstellung befindet, kann das Druckmittel aus dem Druckraum 4 in den Tank 8 ausströmen, so dass die Feststell- und/oder Notbremseinrichtung 1 eingerückt wird, der Traktor sich also im gebremsten Zustand befindet. Darüber hinaus kann das 3/3-Wegeventil 13 mittels des Handhebels oder Fußpedals 14 in eine Sperrstellung oder in eine Durchflussstellung verstellt werden. Das 3/2-Wegeventil 16 weist neben seiner in Figur 1 eingestellten Durchflussstellung, in der es die Arbeitsleitung 17 mit einer Bremsleitung 25 verbindet, eine Ablaufstellung ein, in der die Bremsleitung 25 mit einer Rücklaufleitung 26 verbunden ist.

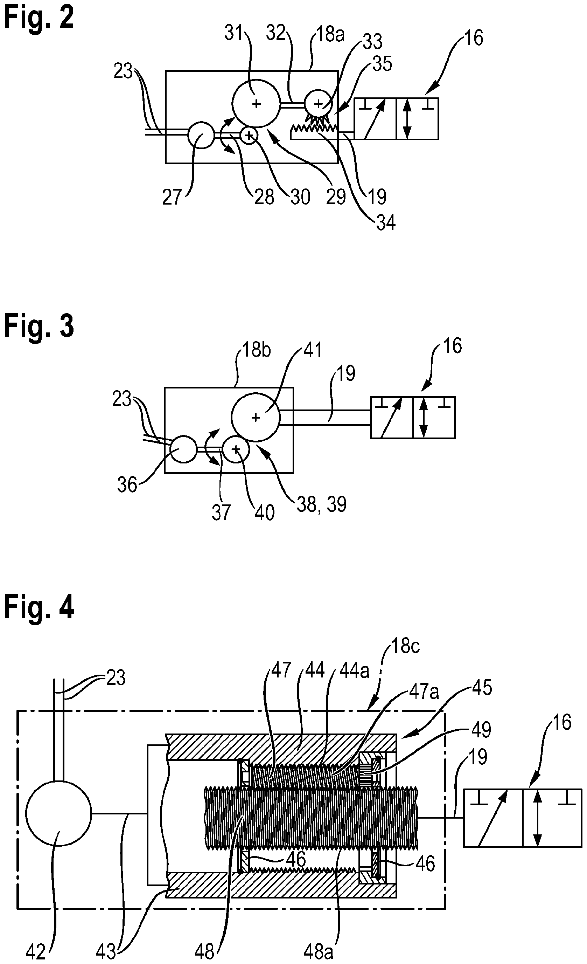

In der Figur 2 ist ein erstes Ausführungsbeispiel einer erfindungsgemäßen Stelleinrichtung 18 a dargestellt, bei der ein Elektromotor 27 über eine Ausgangswelle 28 ein hochübersetztes Getriebe 29 mit einem Antriebsrad 30 kleinen Durchmessers antreibt, wobei dieses mit einem Abtriebsrad 31 großen Durchmesser im Eingriff ist. Das Antriebsrad 31 ist drehfest mit einer Abtriebswelle 32 verbunden, welches ebenfalls drehfest ein Antriebsritzel 33 aufnimmt. Dieses kämmt mit einer Zahnstange 34 eines Zahnstangenantriebs 35, die ihrerseits mit dem Gestänge 19 verbunden ist. Dieser Zahnstangenantrieb 35 und das hochübersetzte Getriebe 29 sorgen für eine Eigenstabilität der gesamten Stelleinrichtung 18a. Zur Darstellung der Übertragung des Antriebsdrehmoments vom Elektromotor 27 auf das Antriebsritzel 33 sind alle Antriebselemente zur Verdeutlichung der Funktion in einer Ebene dargestellt. Bei der Realisierung des Antriebs ergeben sich natürlich andere Wellenverläufe und Anordnungen der Räder.

Gemäß der Figur 3, die ein zweites Ausführungsbeispiel einer erfindungsgemäßen Stelleinrichtung 18 b dargestellt, treibt ein Elektromotor 36 mittels seiner Ausgangswelle 37 ein als hochübersetztes Getriebe 38 ausgebildetes Reibradgetriebe 39 an. Ein im Durchmesser kleines Antriebsrad 40 ist derart innerhalb der Stelleinrichtung geführt, dass es beim Abrollen an einem im Durchmesser großes Abtriebsrad 41 eine Längsverschiebung des Gestänges 19 bewirkt. Auch in diesem Fall sind zur Darstellung der Übertragung des Antriebsdrehmoments vom Elektromotor 27 auf das Antriebsritzel 33 alle Antriebselemente zur Verdeutlichung der Funktion in einer Ebene dargestellt. Wie bei der Figur 2 ergeben sich zur Realisierung des Antriebs andere Wellenverläufe und Anordnungen der Räder.

Schließlich zeigt die Figur 3 ein Ausführungsbeispiel einer Stelleinrichtung 18c, bei der ein Elektromotor 42 über eine zumindest teilweise als Hohlwelle ausgebildete Ausgangswelle 43 an, die an ihrem vom Elektromotor 42 abgewandten Ende als Mutter 44 eines Rollengewindetriebs 45 ausgebildet ist. Dabei sind in der Mutter 44 über einen Planetenträger 46 mehrere umfangsverteilte Gewinderollen 47 geführt. Sowohl die Gewinderollen 47 als auch die Mutter 44 sowie eine Spindel 48 weisen jeweils ein Feingewinde 44a, 47a und 48a mit identischer Gewindesteigung auf.

Das Gewinde 47a der Gewinderollen 47, die drehbar im Planetenträger 46 geführt sind, steht, bezogen auf den Rollengewindetrieb 45, innen mit dem Gewinde 48a der Spindel 48 und außen mit dem Gewinde 44a der Mutter 44 im Eingriff. Außerdem sind die Gewinderollen 47 an einem Ende mit Verzahnungen 49 versehen die in ein drehfest mit der Mutter 44 verbundenes Hohlrad 50 kämmen, wodurch diese zueinander sowie gegenüber der Mutter 44 und der Spindel 48 eine synchrone Bewegung ausführen. Die lineare Stellbewegung der Spindel 48 wird über das Gestänge 19 auf das 3/3-Wegeventil 16 übertragen. Dadurch wird ein bistabiler Stellantrieb für das 3/3-Wegeventil 16 geschaffen.

### Bezugszeichen

- 1: Feststell- und/oder Notbremseinrichtung
- 2: Federspeicherbremszylinder
- 3: Druckfeder
- 4: Druckraum
- 5: Bremskolben
- 6: Federraum
- 7: Entlüftung
- 8: Tank
- 9: Druckspeicher
- 10: Hydrauliksystem des Traktors
- 11: Rückschlagventil
- 12: Druckleitung
- 13: 3/3-Wegeventil
- 14: Handhebel oder Fußpedal
- 15: Rückstellfeder
- 16: 3/2-Wegeventil
- 17: Arbeitsleitung
- 18: Stelleinrichtung
- 18a: Stelleinrichtung
- 18b: Stelleinrichtung
- 18c: Stelleinrichtung
- 19: Gestänge
- 20: elektronische Steuereinrichtung
- 21: CAN-Bus
- 22: Stromversorgung
- 23: Steuerleitungen
- 24: Rücklaufleitung von 12
- 25: Bremsleitung
- 26: Rücklaufleitung von 16
- 27: Elektromotor
- 28: Ausgangswelle
- 29: hochübersetztes Getriebe
- 30: Antriebsrad kleinen Durchmessers
- 31: Abtriebsrad großen Durchmesser
- 32: Abtriebswelle
- 33: Antriebsritzel
- 34: Zahnstange
- 35: Zahnstangenantrieb
- 36: Elektromotor
- 37: Ausgangswelle
- 38: hochübersetztes Getriebe
- 39: Reibradgetriebe
- 40: im Durchmesser kleines Antriebsrad
- 41: im Durchmesser großes Abtriebsrad
- 42: Elektromotor
- 43: Ausgangswelle
- 44: Mutter
- 44a: Gewinde von 44
- 45: Rollengewindetrieb
- 46: Planetenträger
- 47: Gewinderollen
- 47a: Gewinde von 47
- 48: Spindel
- 48a: Gewinde von 48
- 49: Verzahnung von 47
- 50: Hohlrad

## Patentansprüche

1. Steuereinrichtung für eine hydraulisch betätigte, mit einem Federspeicherbremszylinder (2) als Bremszuspanneinrichtung versehene Feststell- und/oder Notbremseinrichtung (1), vorzugsweise eines land- oder bauwirtschaftlich nutzbaren Traktors oder Systemfahrzeuges, wobei die Steuereinrichtung zur Steuerung des Druckes in einem Druckraum (4) des Federspeicherbremszylinders (2) vorgesehen und zwischen diesem und einer Druckquelle (9) angeordnet ist, und wobei die Steuereinrichtung ein als Wegeventil ausgebildetes, elektronisch in zwei unterschiedliche Schaltstellungen aktuierbares Bremsbetätigungsventil (16) aufweist, das über eine elektronische Steuereinheit (20) betätigt wird, **dadurch gekennzeichnet, dass** eine Stelleinrichtung (18, 18a, 19b, 18c) des Bremsbetätigungsventils (16) derart ausgebildet ist, dass diese das Bremsbetätigungsventil (16) in zumindest einer seiner Schaltstellungen eigenstabil hält, so dass dessen Steuerschieber ohne eine weitere Bestromung der Stelleinrichtung (18, 18a, 19b, 18c) in einer zuletzt eingestellten Schaltstellung verbleibt, und die Stelleinrichtung (18, 18a, 19b, 18c) einen selbsthemmenden Antrieb (29, 35, 39, 45) aufweist.

2. Steuereinrichtung nach Patentanspruch 1, **dadurch gekennzeichnet, dass** das Bremsbetätigungsventil (16) als bistabiles Wegeventil ausgeführt ist, dessen Steuerschieber ohne eine Bestromung seiner Stelleinrichtung (18, 18a, 19b, 18c) in jeder seiner beiden zuletzt eingestellten Schaltstellungen verbleibt.

3. Steuereinrichtung nach Patentanspruch 1, **dadurch gekennzeichnet, dass** die Stelleinrichtung (18, 18a, 19b, 18c) einen elektromotorischen Antrieb (27, 36, 42) und einen die rotatorische Antriebsbewegung in eine lineare Stellbewegung wandelnden Stellantrieb (35, 39, 45) aufweist.

4. Steuereinrichtung nach Patentanspruch 3, **dadurch gekennzeichnet, dass** der elektromotorische Antrieb (27, 36, 42) einen als Synchronmotor ausgebildeten Schrittmotor aufweist.

5. Steuereinrichtung nach Patentanspruch 4, **dadurch gekennzeichnet, dass** der Schrittmotor eine Positionsregelung aufweist, mit der ein Erreichen einer Sollposition durch Ermittlung der Schritte bestimmbar ist.

6. Steuereinrichtung nach Patentanspruch 1, **dadurch gekennzeichnet, dass** zur Schaffung eines selbsthemmenden Antriebs das Reibmoments an einem Elektromotor (27, 36, 42) der Stelleinrichtung (18, 18a, 19b, 18c) erhöht wird, indem an einer Rotorwelle des Elektromotors eine Reibeinrichtung vorgesehen ist.

7. Steuereinrichtung nach Patentanspruch 3, **dadurch gekennzeichnet, dass** der Stellantrieb als Zahnstangenantrieb (35), dem ein hochübersetztes Getriebe (29) vorgeschaltet ist, ausgebildet ist.

8. Steuereinrichtung nach Patentanspruch 3, **dadurch gekennzeichnet, dass** der Stellantrieb als Spindeltrieb (45) ausgebildet ist.

9. Steuereinrichtung nach Patentanspruch 1, **dadurch gekennzeichnet, dass** der Stellantrieb als hochübersetztes Reibradgetriebe (39) ausgebildet ist.

10. Steuereinrichtung nach Patentanspruch 8, **dadurch gekennzeichnet, dass** der Spindeltrieb als Rollengewindetrieb (45) ausgebildet ist.

11. Steuereinrichtung nach Patentanspruch 1, **dadurch gekennzeichnet, dass** das Bremsbetätigungsventil (16) als 3/2-Wegeventil ausgebildet ist, das in einer ersten Schaltstellung die Druckquelle (9) mit dem Druckraum (4) und in einer zweiten Schaltstellung den Druckraum (4) mit einem Rücklauf (26) verbindet.

12. Steuersystem einer hydraulisch betätigten Feststell- und/oder Notbremseinrichtung (1) eines land- oder bauwirtschaftlich nutzbaren Fahrzeugs, wobei die Feststell- und/oder Notbremseinrichtung (1) einen Federspeicherbremszylinder (2) mit einem mit Druckmittel beaufschlagbaren Druckraum (4) aufweist, der über ein in zwei Schaltstellungen aktuierbares, über eine elektronische Steuereinrichtung (20) steuerbares Bremsbetätigungsventil (16) und eine als 3/3-Wegeventil ausgebildete, manuell betätigbare Ventileinheit (13) mit einer als Druckspeicher (9) ausgeführten Druckquelle verbindbar ist, wobei die Ventileinheit (13) eine Durchflussstellung, eine Sperrstellung und eine Ablaufstellung aufweist, **gekennzeichnet durch** die Ausbildung der Steuereinrichtung (16) nach einem der Patentansprüche 1 - 11.

## Claims

1. A control device for a hydraulically actuated parking and/or emergency brake device (1) provided with a spring-loaded brake cylinder (2) as a brake applicator device, preferably of a tractor or system vehicle which can be used in agriculture or the construction industry, wherein the control device is provided for controlling the pressure in a pressure chamber (4) of the spring-loaded brake cylinder (2) and is arranged between same and a pressure source (9), and wherein the control device has a brake actuation valve (16) which is in the form of a directional control valve and which can be electronically actuated into two different switching positions and which is actuated by way of an electronic control unit (20), **characterised in that** a setting device (18, 18a, 19b, 18c) of the brake actuation valve (16) is so designed that same holds the brake actuation valve (16) in inherently stable relationship in at least one of its switching positions so that its control spool without further powering of the setting device (18, 18a, 19b, 18c) remains in a last-set switching position and the setting device (18, 18a, 19b, 18c) has a self-locking drive (29, 35, 39, 45).

2. A control device according to claim 1 **characterised in that** the brake actuation valve (16) is in the form of a bistable directional control valve whose control spool without powering of its setting device (18, 18a, 19b, 18c) remains in each of its two last-set switching positions.

3. A control device according to claim 1 **characterised in that** the setting device (18, 18a, 19b, 18c) has an electric-motor drive (27, 36, 42) and a setting drive (35, 39, 45) for converting the rotational drive movement into a linear setting movement.

4. A control device according to claim 3 **characterised in that** the electric-motor drive (27, 36, 42) has a stepping motor in the form of a synchronous motor.

5. A control device according to claim 4 **characterised in that** the stepping motor has a position regulating means with which an attainment of a target position can be determined by ascertaining the steps.

6. A control device according to claim 1 **characterised in that** for providing a self-locking drive the frictional torque at an electric motor (27, 36, 42) of the setting device (18, 18a, 19b, 18c) is increased by a friction device being provided at a rotor shaft of the electric motor.

7. A control device according to claim 3 **characterised in that** the setting drive is in the form of a rack-and-pinion drive (15), upstream of which is provided a step-up transmission gear (29).

8. A control device according to claim 3 **characterised in that** the setting drive is in the form of a spindle drive.

9. A control device according to claim 1 **characterised in that** the setting drive is in the form of a step-up friction gear (39).

10. A control device according to claim 8 **characterised in that** the spindle drive is in the form of a roller thread drive (45).

11. A control device according to claim 1 **characterised in that** the brake actuation valve (16) is in the form of a 3/2 directional control valve which in a first switching position connects the pressure source (9) to the pressure chamber (4) and in a second switching position connects the pressure chamber (4) to a return (26).

12. A control system of a hydraulically actuated parking and/or emergency brake device (1) of a vehicle which can be used in agriculture or the construction industry, wherein the parking and/or emergency brake device (1) has a spring-loaded brake cylinder (2) with a pressure chamber (4) which can be acted upon with pressure means and which can be connected to a pressure source in the form of a pressure storage means (9) by way of a brake actuation valve (16) which can be actuated into two switching positions and which is controllable by way of an electronic control device (20), and a manually actuable valve unit (13) in the form of a 3/3 directional control valve, wherein the valve unit (13) has a through-flow position, a blocking position and a discharge position, **characterised by** the control device (16) being designed in accordance with one of claims 1 to 11.

## Revendications

1. Équipement de commande pour un équipement de freinage de stationnement et/ou de secours actionné hydrauliquement (1) prévu avec un cylindre de freinage à ressort accumulateur (2) comme équipement de serrage de frein, de préférence d'un tracteur ou d'un véhicule multitâche utilisable en agriculture ou en génie civil, l'équipement de commande étant prévu pour commander une pression dans une chambre de pression (4) du cylindre de freinage à ressort accumulateur (2) et étant disposé entre celui-ci et une source de pression (9), et l'équipement de commande comportant une valve d'actionnement de frein (16) qui est conformée en valve directionnelle, qui est actionnable électroniquement dans deux positions de commutation différentes et qui est actionnée par l'intermédiaire d'une unité de commande électronique (20), **caractérisé en ce qu'**un équipement de réglage (18, 18a, 19b, 18c) de la valve d'actionnement de frein (16) est conçu de façon à maintenir la valve d'actionnement de frein (16) avec une stabilité propre dans au moins une de ses positions de commutation, de façon que son tiroir de commande reste dans une position de commutation adoptée en dernier sans autre alimentation électrique de l'équipement de réglage (18, 18a, 19b, 18c), et l'équipement de réglage (18, 18a, 19b, 18c) comporte un entraînement autobloquant (29, 35, 39, 45).

2. Équipement de commande selon la revendication 1, **caractérisé en ce que** la valve d'actionnement de frein (16) est conformée en valve directionnelle bistable dont le tiroir de commande reste dans chacune de ses deux positions de commutation adoptées en dernier sans alimentation électrique de son équipement de réglage (18, 18a, 19b, 18c).

3. Équipement de commande selon la revendication 1, **caractérisé en ce que** l'équipement de réglage (18, 18a, 19b, 18c) comporte un entraînement électromotorisé (27, 36, 42) et un entraînement de réglage (35, 39, 45) convertissant le mouvement d'entraînement rotatif en un mouvement de positionnement linéaire.

4. Équipement de commande selon la revendication 3, **caractérisé en ce que** l'entraînement électromotorisé (27, 36, 42) comporte un moteur pas à pas conformé en moteur synchrone.

5. Équipement de commande selon la revendication 4, **caractérisé en ce que** le moteur pas à pas comporte une régulation de position avec laquelle une atteinte d'une position de consigne peut être déterminée par détection des pas.

6. Équipement de commande selon la revendication 1, **caractérisé en ce que**, pour créer un entraînement autobloquant, le moment de friction sur un moteur électrique (27, 36, 42) de l'équipement de réglage (18, 18a, 19b, 18c) est augmenté par le fait qu'un équipement de friction est prévu sur un arbre de rotor du moteur électrique.

7. Équipement de commande selon la revendication 3, **caractérisé en ce que** l'entraînement de réglage est conformé en entraînement à crémaillère (35) qui est précédé d'une transmission à forte démultiplication (29).

8. Équipement de commande selon la revendication 3, **caractérisé en ce que** l'entraînement de réglage est conformé en mécanisme à broche filetée (45).

9. Équipement de commande selon la revendication 1, **caractérisé en ce que** l'entraînement de réglage est conformé en transmission à galet de friction à forte démultiplication (39).

10. Équipement de commande selon la revendication 8, **caractérisé en ce que** le mécanisme à broche filetée est conformé en mécanisme à rouleaux filetés (45).

11. Équipement de commande selon la revendication 1, **caractérisé en ce que** la valve d'actionnement de frein (16) est conformée en valve directionnelle à 3 voies/2 positions qui, dans une première position de commutation, relie la source de pression (9) à la chambre de pression (4) et, dans une seconde position de commutation, relie la chambre de pression (4) à une conduite de retour (26) .

12. Système de commande d'un équipement de freinage de stationnement et/ou de secours actionné hydrauliquement (1) d'un véhicule utilisable en agriculture ou en génie civil, l'équipement de freinage de stationnement et/ou de secours (1) comportant un cylindre de freinage à ressort accumulateur (2) avec une chambre de pression (4) qui peut être soumise à l'action d'agent de pression et qui peut être reliée à une source de pression conformée en accumulateur de pression (9) par l'intermédiaire d'une valve d'actionnement de frein (16) actionnable dans deux positions de commutation et commandable par l'intermédiaire d'un équipement de commande électronique (20) et d'une unité de valve (13) conformée en valve directionnelle à 3 voies/3 positions et actionnable manuellement (13), l'unité de valve (13) comportant une position de passage, une position fermée et une position d'écoulement, **caractérisé par** la conception de l'équipement de commande (16) selon une des revendications 1 - 11.
